# FASCICULE DE BREVET EUROPEEN

(11) **EP 0 737 819 B1**
(45) Date de publication et mention de la délivrance du brevet: **28.06.2000**
(21) Numéro de dépôt: 96400762.9
(22) Date de dépôt: 09.04.1996
(51) Int. Cl.: F16B 35/00

(54) **Procédé de fabrication d'une vis de butée d'arbre, et vis de butée d'arbre notamment pour moteur électronique**
Verfahren zur Herstellung einer Wellenanschlagschraube sowie Wellenanschlagschraube, insbesondere für einen Elektromotor
Method of manufacturing a set screw for a shaft and set screw for a shaft, especially for an electric motor

(30) Priorité: 11.04.1995 FR 9504313
(43) Date de publication de la demande: 16.10.1996
(73) Titulaire: VALEO SYSTEMES D'ESSUYAGE, 78321 La Verrière (FR)
(72) Inventeur: Hommelet, Stéphane, 86100 Chatellerault (FR); Savy, Xavier, 86100 Chatellerault (FR)
(74) Mandataire: Le Forestier, Eric

(56) Documents cités:
- DE-A- 3 737 102
- FR-A- 2 579 229
- FR-A- 2 708 623
- US-A- 4 136 416
- "INDUSTRIAL FASTENERS HANDBOOK" , TRADE & TECHNICAL PRESS LIMITED , MORDEN, SURREY (UK) XP002006821 * page 133, ligne 30 - ligne 35 * * page 134; tableau 1 *
- IBM TECHNICAL DISCLOSURE BULLETIN, vol. 34, no. 4A, ARMONK, NY, (US), page 264 XP002006820 "PREVENTIVE MECHANISM OF SET SCREW LOOSENING"

## Description

La présente invention concerne d'une façon générale les vis de butée d'arbres, et plus particulièrement un procédé de fabrication d'une nouvelle vis de butée d'arbre, notamment de l'arbre d'induit d'un moteur électrique, et une nouvelle vis de butée d'arbre suivant les préambules des revendications 1 et 4, qui sont basés sur "Industrial Fasteners Handbook," pages 133, 134.

Dans l'état de la technique connue, notamment la technique des moto-réducteurs pour l'entraînement des balais d'essuyage d'un pare-brise ou d'une lunette arrière de véhicule, une vis de butée d'arbre d'induit, destinée à éviter toute translation axiale de l'arbre tout en minimisant la résistance à la rotation, est réalisée par usinage d'acier. Elle se présente alors sous forme d'un corps généralement cylindrique et plein, fileté extérieurement, dans une face terminale radiale duquel est formée une empreinte pour outil de vissage.

Une telle vis connue présente toutefois de nombreux inconvénients :
- elle est coûteuse à réaliser, de par le processus d'usinage requis;
- elle est lourde;
- elle présente une résistance à la corrosion médiocre, avec notamment le risque d'accroître les frottements entre sa surface terminale d'appui contre le bout d'arbre et ce dernier;
- elle est extrêmement difficile à monter par un processus automatisé; plus précisément, sa forme est telle qu'elle est difficile à positionner dans un sens plutôt que dans l'autre par rapport à l'outil de vissage; en outre, l'empreinte étant généralement constituée par une gorge rectiligne pour tournevis plat, la préhension et le vissage automatisés sont délicats, voire impossibles, à mettre en oeuvre.

La présente invention vise à pallier ces inconvénients.

Elle propose à cet effet, selon un premier aspect, un procédé de fabrication d'une vis de butée d'arbre, notamment pour un arbre d'induit d'un moteur électrique, caractérisé en ce qu'il comprend les étapes suivantes :
(a) découpage d'une pastille d'acier doux,
(b) emboutissage de la pastille pour former une pièce en creux comportant une paroi de fond généralement plane et une jupe généralement cylindrique circonscrivant une empreinte de vissage,
(c) usinage d'un filetage sur l'extérieur de ladite jupe, puis
(d) nitruration de la pièce.

Des aspects préférés, mais non limitatifs, de ce procédé sont les suivants :
- la pastille d'acier doux présente une épaisseur d'environ 1 mm.
- ladite empreinte de vissage réalisée par emboutissage est une empreinte à six pans creux.

Selon un second aspect, l'invention propose une vis de butée d'arbre, notamment pour un arbre d'induit d'un moteur électrique, caractérisé en ce qu'elle est réalisée en acier doux avec traitement de surface par nitruration et en ce qu'elle comprend un fond dont une surface externe forme appui pour une extrémité de l'arbre, une jupe s'étendant à partir du fond, une empreinte de vissage définie à l'intérieur de la jupe et un filetage s'étendant autour de la jupe.

Des aspects préférés de cette vis sont les suivants :
- la transition entre le fond et la jupe est arrondie.
- l'empreinte est une empreinte hexagonale à six pans.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue de face, côté empreinte, d'une vis de butée selon l'invention,
la figure 2 est une vue en coupe axiale de la vis de butée de la figure 1,
la figure 3 est une vue en coupe axiale de l'ensemble d'un motoréducteur d'essuyage équipé d'une vis selon les figures 1 et 2,
la figure 4 est une vue en plan d'une bande d'acier doux utilisée dans le procédé de fabrication de la vis des figures 1 et 2, et
la figure 5 est une vue schématique en coupe axiale d'un outil d'emboutissage utilisé dans le procédé de fabrication de la vis des figures 1 et 2.

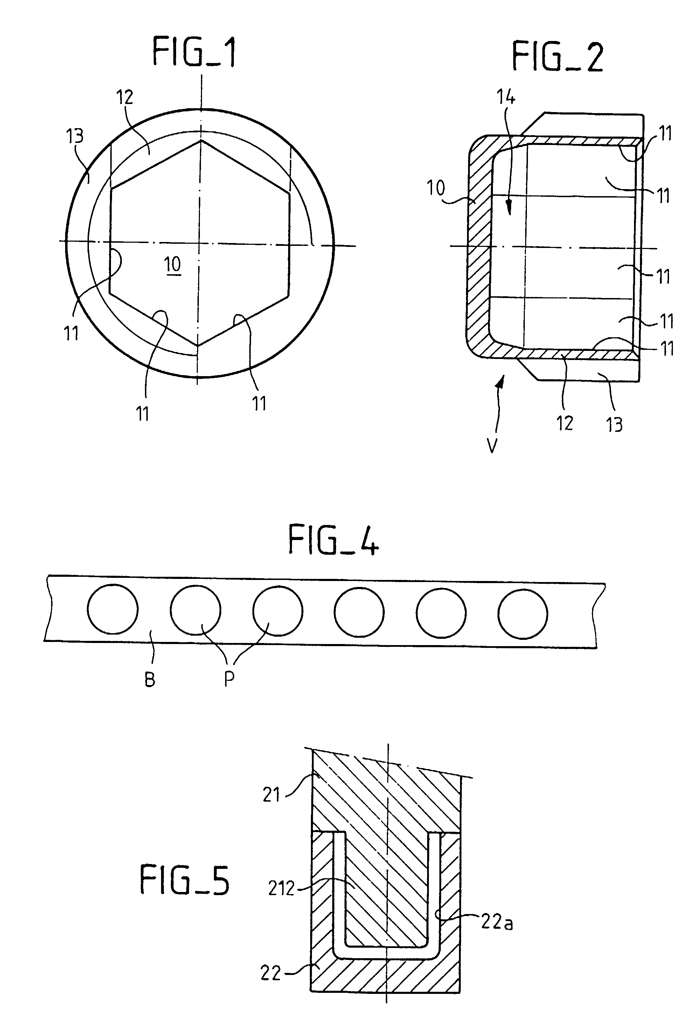

En référence tout d'abord aux figures 1 et 2, on a représenté une vis V destinée notamment à être utilisée comme vis de butée d'arbre d'induit dans un motoréducteur apte à entraîner les balais d'essuyage de pare-brise ou de lunette arrière d'un véhicule notamment automobile.

Cette vis présente une section axiale en forme générale de U, dont un fond plat 10 définit sur sa face externe une surface d'appui pour une extrémité de l'arbre d'induit. La vis comporte également une jupe généralement cylindrique 12. A l'intérieur de la jupe est formée une empreinte à six pans hexagonaux 11, se terminant par une partie en retrécissement 14 au voisinage du fond 10.

La transition entre le fond et la jupe est arrondie.

A l'extérieur de la jupe est formé, sur une partie de son étendue axiale, un filetage 13 se terminant sensiblement au droit de la transition entre l'empreinte 11 et la partie en retrécissement 14.

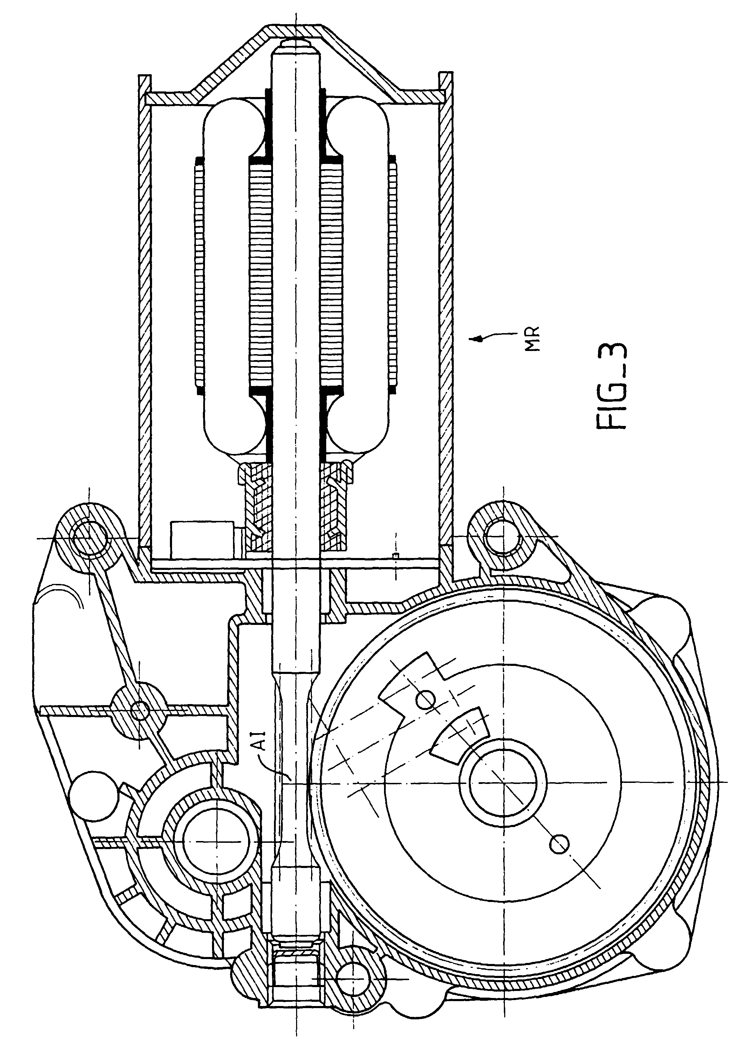

La figure 3 montre la vis V engagée par vissage, à l'aide d'un outil à six pans approprié, standard, dans un orifice fileté OF jusqu'à venir en appui contre une extrémité bombée de l'arbre d'induit AI du moto-réducteur MR.

Selon une caractéristique de l'invention, la vis V est réalisée par pliage et formage à froid d'un métal ou alliage ayant des caractéristiques mécaniques adaptées à un tel traitement.

De préférence, on utilise de l'acier doux, avec une limite élastique Re d'environ 300 N/mm2. L'emboutissage d'un tel matériau, pour autant que les surfaces de l'outil d'emboutissage présentent la qualité souhaitée, permet de réaliser une surface d'appui (face externe du fond 10) ayant une bonne planéité (≤0,02 mm) et un très bon état de surface (Ra<0,2).

La vis de butée est réalisée en découpant tout d'abord une pastille circulaire P dans une bande d'acier doux B (figure 4) d'une épaisseur d'environ 1 mm.

Ensuite, le formage à froid est effectué en une ou deux fois à l'aide de l'outil d'emboutissage représenté schématiquement sur la figure 5, qui comprend une partie 21 pourvue d'une tête 21a à faces hexagonales et d'une partie 22 pourvue d'un creux cylindrique 22a.

C'est bien entendu la qualité de surface du fond du creux 22a qui détermine la qualité de la surface d'appui de la vis.

On observera ici que l'arrondi à la transition entre le fond de la vis et sa jupe a pour objet de faciliter l'opération d'emboutissage.

Ensuite, alors que la vis est encore dans un état relativement malléable, on réalise sur l'extérieur de la jupe 12 le filetage 13, à l'aide d'une filière conventionnelle ou par usinage.

Afin de conférer à la vis la dureté appropriée pour l'application considérée, on la soumet après réalisation du filetage à un procédé de nitruration, en milieu gazeux ou liquide. On peut par exemple mettre en oeuvre l'un des traitements décrits dans les documents FR-A-2 579 229, FR-A-2 672 059, FR-A-2 679 258, FR-A-2 708 623 et FR-A-2 708 941.

On obtient alors une vis d'une très grande dureté (typiquement supérieure à 550 HV), et dont la résistance élastique est accrue, typiquement d'un coefficient de 2 à 3.

Ainsi l'on a décrit une nouvelle vis de butée et son procédé de fabrication, qui présentent de nombreux avantages :
- par rapport à une vis usinée traditionnelle, le coût de la pièce est réduit d'au moins 30%;
- le poids de la pièce est également sensiblement réduit (d'au moins 30%);
- malgré le recours à un simple formage à froid, la planéité et l'état de surface de la surface d'appui peuvent être excellentes;
- la nitruration permet à la pièce de résister parfaitement aux sollicitations de l'arbre d'induit, malgré sa faible épaisseur, et permet en outre d'offrir une surface d'appui à coefficient de frottement limité;
- la forme de l'empreinte à six pans hexagonaux permet de faciliter le vissage automatisé de la pièce;
- en outre sa forme en creux, par le décalage du centre de gravité qu'elle induit, permet de faciliter la distribution automatique de la pièce par bol vibrant;
- le procédé de nitruration donne à la pièce une excellente tenue à la corrosion, en évitant une détérioration de celle-ci dans le temps.

Bien entendu, la présente invention n'est nullement limitée aux formes de réalisation décrites et représentées, mais l'homme de l'art saura y apporter toute variante ou modification dans le cadre des revendications.

## Revendications

1. Procédé de fabrication d'une vis de butée d'arbre, notamment pour un arbre d'induit d'un moteur électrique, caractérisé en ce qu'il comprend les étapes suivantes :
(a) découpage d'une pastille (P) d'acier doux,
(b) emboutissage de la pastille pour former une pièce en creux comportant une paroi de fond (10) généralement plane et une jupe (12) généralement cylindrique circonscrivant une empreinte de vissage (11),
(c) usinage d'un filetage (13) sur l'extérieur de ladite jupe, puis
(d) nitruration de la pièce.

2. Procédé selon la revendication 1, caractérisé en ce que la pastille (P) d'acier doux présente une épaisseur d'environ 1 mm.

3. Procédé selon l'une des revendications 1 et 2, caractérisé en ce que ladite empreinte de vissage réalisée par emboutissage est une empreinte à six pans creux (11).

4. Vis de butée d'arbre, notamment pour un arbre d'induit (AI) d'un moteur électrique (MR) obtenue selon le procédé de l'une quelconque des revendications 1 à 3 caractérisé en ce qu'elle est réalisée en acier doux avec traitement de surface par nitruration et en ce qu'elle comprend un fond (10) dont une surface externe forme appui pour une extrémité de l'arbre, une jupe (12) s'étendant à partir du fond, une empreinte de vissage (11) définie à l'intérieur de la jupe et un filetage (13) s'étendant autour de la jupe.

5. Vis de butée selon la revendication 4, caractérisée en ce que la transition entre le fond (10) et la jupe (12) est arrondie.

6. Vis de butée selon la revendication 4 ou 5, caractérisée en ce que l'empreinte est une empreinte hexagonale à six pans.

## Patentansprüche

1. Verfahren zur Herstellung einer Wellenanschlagschraube, insbesondere für eine Ankerwelle eines Elektromotors, **dadurch gekennzeichnet**, daß es die folgenden Schritte umfaßt:
(a) Stanzen einer Scheibe (P) aus weichem Stahl,
(b) Tiefziehen der Scheibe, um ein vertieftes Teil mit einer allgemein ebenen Bodenwand (10) und einer allgemein zylindrischen Einfassung (12) zu bilden, die eine Schraubaufnahme (11) umschreibt,
(c) Einarbeitung eines Gewindes (13) an der Außenseite der besagten Einfassung, anschließend
(d) Nitrieren des Teils.

2. Verfahren nach Anspruch 1, **dadurch gekennzeichnet**, daß die Scheibe (P) aus weichem Stahl eine Dicke von etwa 1 mm aufweist.

3. Verfahren nach einem der Ansprüche 1 und 2, **dadurch gekennzeichnet**, daß die besagte durch Tiefziehen ausgeführte Schraubaufnahme eine Innensechskantaufnahme (11) ist.

4. Wellenanschlagschraube, insbesondere für eine Ankerwelle (AI) eines Elektromotors (MR), die nach dem Verfahren eines der Ansprüche 1 bis 3 hergestellt wird, **dadurch gekennzeichnet,** daß sie aus weichem Stahl mit Oberflächenbehandlung durch Nitrieren ausgeführt ist und daß sie einen Boden (10), dessen Außenfläche eine Auflage für ein Ende der Welle bildet, eine Einfassung (12), die sich vom Boden aus erstreckt, eine im Innern der Einfassung definierte Schraubaufnahme (11) und ein Gewinde (13) umfaßt, das sich um die Einfassung herum erstreckt.

5. Anschlagschraube nach Anspruch 4, **dadurch gekennzeichnet**, daß der Übergang zwischen dem Boden (10) und der Einfassung (12) abgerundet ist.

6. Anschlagschraube nach Anspruch 4 oder 5, **dadurch gekennzeichnet**, daß die Aufnahme eine Sechskantaufnahme ist.

## Claims

1. Method of manufacturing a set screw for a shaft, notably for the rotor shaft of an electric motor, characterised in that it comprises the following steps:
(a) cutting a blank (P) of soft steel,
(b) pressing the blank to form a hollow piece having a roughly plane bottom wall (10) and a roughly cylindrical skirt (12) circumscribing a screwing recess (11),
(c) machining a thread (13) on the outside of the said skirt, and then
(d) nitriding the part.

2. Method according to Claim 1, characterised in that the blank (P) of soft steel has a thickness of approximately 1 mm.

3. Method according to one of Claims 1 and 2, characterised in that the said screwing recess produced by pressing is a recess with six hollow flats (11).

4. Set screw for a shaft, notably for the rotor shaft (AI) of an electric motor (MR), obtained according to the method of any one of Claims 1 to 3, characterised in that it is produced from soft steel with surface treatment by nitriding and in that it comprises a bottom (10), an external surface of which forms an abutment for one end of the shaft, a skirt (12) extending from the bottom, a screwing recess (11) defined inside the skirt and a thread (13) extending around the skirt.

5. Set screw according to Claim 4, characterised in that the transition between the bottom (10) and the skirt (12) is rounded.

6. Set screw according to Claim 4 or 5, characterised in that the recess is a hexagonal recess with six flats.
